# EUROPEAN PATENT APPLICATION

(11) **EP 4 793 038 A1**
(43) Date of publication of application: **19.08.2026**
(21) Application number: 24890786.7
(22) Date of filing: 15.11.2024
(51) Int. Cl.: B32B 17/06, B32B 7/12, B32B 33/00, B60J 7/00, C03C 27/12

(54) **LAMINATED GLASS AND VEHICLE**

(30) Priority: 17.11.2023 CN 202311542718
(71) Applicant: Fuyao Glass Industry Group Co., Ltd., Fuqing, Fujian 350300 (CN)
(72) Inventor: TSO, Fai, Fuzhou, Fujian 350300 (CN); HUANG, Fengzhu, Fuzhou, Fujian 350300 (CN); ZENG, Dong, Fuzhou, Fujian 350300 (CN); ZHENG, Xinzhi, Fuzhou, Fujian 350300 (CN); LU, Guoshui, Fuzhou, Fujian 350300 (CN); FUKUHARA, Kohta, Fuzhou, Fujian 350300 (CN)
(74) Representative: Mewburn Ellis LLP
(86) International application number: PCT/CN2024/132151
(87) International publication number: WO 2025/103431

(57) **Abstract**

Provided is a laminated glass and a vehicle, which that can ensure that the difference in appearance color of the laminated glass is small under different viewing angles, ensuring consistency of the overall appearance color of the vehicle. The laminated glass includes an outer glass, an inner glass, an infrared reflective coating, and an adhesive layer. The adhesive layer is sandwiched between the outer glass and the inner glass. The outer glass has a first surface and a second surface disposed opposite to each other. The inner glass has a third surface and a fourth surface disposed opposite to each other. The third surface faces the second surface. The infrared reflective coating is disposed on the second surface. The laminated glass has a maximum color difference Cₘₐₓ of reflected color of ≤ 3.5 for light at an incident angle θ in a range of 10° ≤ θ ≤ 80°.

## Description

### CROSS-REFERENCE TO RELATED APPLICATION(S)

This application claims priority to Chinese Patent Application No. 202311542718.9, filed November 17, 2023 and entitled "Laminated Glass and Vehicle", the entire disclosure of which is hereby incorporated by reference.

### TECHNICAL FIELD

The present disclosure relates to the field of glass technology, and more particularly to a laminated glass and a vehicle.

### BACKGROUND

New energy vehicles are gaining increasing market acceptance, but due to limitations in overall design, an interior height space has been significantly reduced. As a result, more and more vehicles are eliminating sunroof sunshades to gain more interior height space, and eliminating sunshades also helps reduce overall vehicle weight and manufacturing costs. For sunroof glasses without sunshades, the interior becomes extremely hot in summer due to high temperature and strong direct sunlight. Therefore, more and more sunroof glasses are incorporating infrared reflective coatings. However, the infrared reflective coating causes the sunroof glasses to exhibit different color appearances depending on the viewing angle, reducing the consistency of the overall appearance color of the vehicle. Especially for privacy or light-blocking needs, sunroof glasses without sunshades need to be designed with low visible light transmittance, such as less than 20% or even less than 10%, which further exacerbates the inconsistency of appearance color under different viewing angles.

### SUMMARY

Embodiments of the present disclosure provide a laminated glass and a vehicle, which can ensure that the difference in appearance color of the laminated glass is small under different viewing angles, ensuring the consistency of the overall appearance color of the vehicle.

In a first aspect, a laminated glass is provided in the present disclosure. The laminated glass includes an outer glass, an inner glass, an infrared reflective coating, and an adhesive layer. The adhesive layer is sandwiched between the outer glass and the inner glass, the outer glass has a first surface and a second surface disposed opposite to each other, the inner glass has a third surface and a fourth surface disposed opposite to each other, the third surface faces the second surface, and the infrared reflective coating is disposed on the second surface. The laminated glass has a maximum color difference Cmax of reflected color of ≤ 3.5 for light at an incident angle θ in a range of 10° ≤ θ ≤ 80°.

In an embodiment, when the incident angle θ is in a range of 10°≤θ≤80°, a Lab value of the reflected color of the laminated glass measured from a side where the first surface is located satisfies: -5≤*a*≤1 and -5≤*b*≤1.

In an embodiment, a visible light transmittance of the laminated glass is *TL1,* and *TL1* < 10%; and a total solar energy transmittance of the laminated glass is *TTS*, and *TTS <* 25%.

In an embodiment, a visible light reflectance of the laminated glass measured from a side where the first surface is located is *RL,* and *RL* < 15%.

In an embodiment, the laminated glass further includes a low-emissivity coating, the low-emissivity coating is disposed on the fourth surface, the low-emissivity coating includes at least one transparent conductive oxide layer, a material of the at least one transparent conductive oxide layer includes at least one member selected from a group consisting of doped zinc oxide, indium tin oxide (ITO), nickel chromium oxide (NiCrOₓ), and fluorine-doped tin oxide (FTO). The doped zinc oxide is zinc oxide doped with one or more of following elements: aluminum, tungsten, hafnium, gallium, yttrium, niobium, and neodymium.

In an embodiment, the infrared reflective coating includes an inner dielectric layer, at least two metal layers, at least one intermediate dielectric layer, and an outer dielectric layer stacked sequentially. Each of the at least one intermediate dielectric layer is disposed between two adjacent metal layers, and the inner dielectric layer is disposed on the second surface. A metal layer among the at least two metal layers closest to the outer dielectric layer serves as an outermost metal layer, and an intermediate dielectric layer among the at least one intermediate dielectric layer in direct contact with the outermost metal layer serves as an outermost intermediate dielectric layer.

In an embodiment, a ratio of a physical thickness of the outer dielectric layer to a physical thickness of the outermost metal layer is greater than or equal to 4, or is 4.5 to 10.

In an embodiment, a ratio of a sum of a physical thickness of the outermost intermediate dielectric layer and a physical thickness of the outer dielectric layer to a physical thickness of the outermost metal layer is greater than or equal to 14, or is 15 to 20.

In an embodiment, the infrared reflective coating further includes an absorption layer in direct contact with a metal layer. The absorption layer is disposed between the metal layer and an intermediate dielectric layer, and/or, the absorption layer is disposed between the metal layer and the outer dielectric layer. A material of the absorption layer includes at least one member selected from a group consisting of NiCr, NiAl, NiSi, Cr, TiN, NbN, and MoTi.

In an embodiment, the inner dielectric layer includes at least two stacked inner dielectric sublayers, each intermediate dielectric layer includes at least two stacked intermediate dielectric sublayers, and the outer dielectric layer includes at least two stacked outer dielectric sublayers.

In an embodiment, an average refractive index of the inner dielectric layer is 1.9 to 2.4, an average refractive index of each intermediate dielectric layer is 1.9 to 2.4, and an average refractive index of the outer dielectric layer is 1.9 to 2.4.

In an embodiment, a refractive index of an outer dielectric sublayer is 2.5 to 2.75, and a physical thickness of the outer dielectric sublayer is 0.5nm to 10nm.

In an embodiment, the inner glass is tinted glass, and/or the adhesive layer is a tinted polymer film.

In an embodiment, a visible light transmittance of the outer glass is *TL2,* and *TL2*>80%.

In a second aspect, a vehicle is provided in the present disclosure. The vehicle includes a vehicle body and the laminated glass in any of the above embodiments. the laminated glass is mounted on the vehicle body.

The laminated glass and vehicle provided in the present disclosure, by providing a reasonably designed and optimized infrared reflective coating in the laminated glass, can make the reflected color of the laminated glass close to a neutral color, and make the difference in appearance color of the laminated glass small under different viewing angles, which is conducive to achieving a neutral color appearance from all viewing angles, thereby ensuring the consistency of the overall appearance color of the vehicle and improving the visual premium feel of the overall vehicle appearance.

### BRIEF DESCRIPTION OF THE DRAWINGS

In order to more clearly illustrate technical solutions of embodiments of the present disclosure, accompany drawings used in the embodiments of the present disclosure will be described below.
FIG. 1 is a schematic structural view of a vehicle provided in the present disclosure.
FIG. 2 is a schematic structural cross-sectional view of a laminated glass provided in the present disclosure.
FIG. 3 is a schematic structural cross-sectional view of another laminated glass provided in the present disclosure.
FIG. 4 is a schematic structural view of an infrared reflective coating provided in the present disclosure in a first embodiment.
FIG. 5 is a schematic structural view of an infrared reflective coating provided in the present disclosure in a second embodiment.
FIG. 6 is a schematic structural view of an infrared reflective coating provided in the present disclosure in a third embodiment.
FIG. 7 is a schematic structural view of an infrared reflective coating provided in the present disclosure in a fourth embodiment.

Names corresponding to reference signs in figures are as follows.

Vehicle 100, body 110, laminated glass 120, outer glass 10, infrared reflective coating 20, adhesive layer 30, inner glass 40, low-emissivity coating 50, first surface 11, second surface 12, third surface 41, fourth surface 42, inner dielectric layer 21, first metal layer 22, first intermediate dielectric layer 23, second metal layer 24, outer dielectric layer 25, second intermediate dielectric layer 26, third metal layer 27, first absorption layer 28, second absorption layer 29, first inner dielectric sublayer 211, second inner dielectric sublayer 212, third inner dielectric sublayer 213, first outer dielectric sublayer 251, second outer dielectric sublayer 252, third outer dielectric sublayer 253, fourth outer dielectric sublayer 254, first intermediate dielectric sublayer 231, second intermediate dielectric sublayer 232, third intermediate dielectric sublayer 233, fourth intermediate dielectric sublayer 261, fifth intermediate dielectric sublayer 262, sixth intermediate dielectric sublayer 263.

### DETAILED DESCRIPTION

Technical solutions in the embodiments of the present disclosure will be clearly and completely described below with reference to the accompanying drawings.

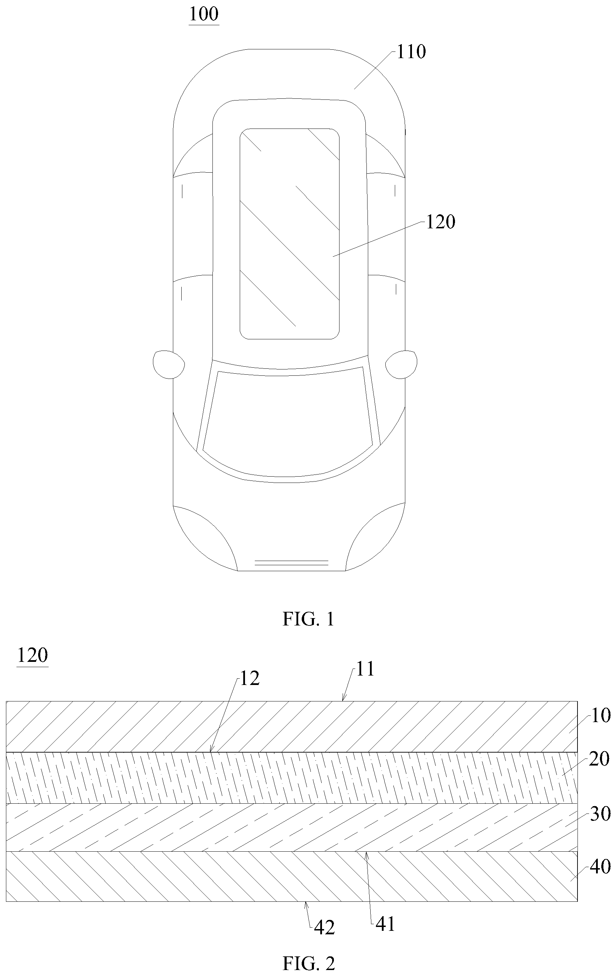

Reference is made to FIG. 1. The vehicle 100 provided in embodiments of the present disclosure can be, but is not limited to, a sedan, truck, pickup truck, commercial vehicle, bus, or off-road vehicle. The present disclosure does not impose any limitations in this regard. In this embodiment, the vehicle 100 may include a vehicle body 110 and a laminated glass 120, with the laminated glass 120 installed on the vehicle body 110. For example, the laminated glass 120 can be used as a sunroof glass, or as a rear door glass, triangular window glass, or rear windshield, etc.

After the laminated glass 120 provided in the present disclosure is installed on the vehicle body 110, the reflected color of the laminated glass 120 when viewed from outside the vehicle at different angles is close to a neutral color, and the difference between reflected colors at different viewing angles is small, meeting the design requirements of a neutral color appearance from all angles. This ensures the consistency of the overall appearance color of the vehicle 100 and improves the visual premium feel of the overall vehicle appearance. Furthermore, the laminated glass 120 can reduce the transmission of infrared, ultraviolet, and visible light into the interior of the vehicle 100, providing good heat insulation and low visible light transmittance, thus improving thermal and brightness comfort inside the vehicle. Simultaneously, the laminated glass 120 can reduce heat radiation entering the vehicle 100 in summer and reduce heat loss from the vehicle interior to the outside in winter, thereby meeting energy conservation and environmental protection requirements.

Reference is made to FIG. 2. The laminated glass 120 includes an outer glass 10, an infrared reflective coating 20, an adhesive layer 30, and an inner glass 40. The adhesive layer 30 is sandwiched between the outer glass 10 and the inner glass 40, and the infrared reflective coating 20 is disposed on a surface of the outer glass 10 facing the adhesive layer 30.

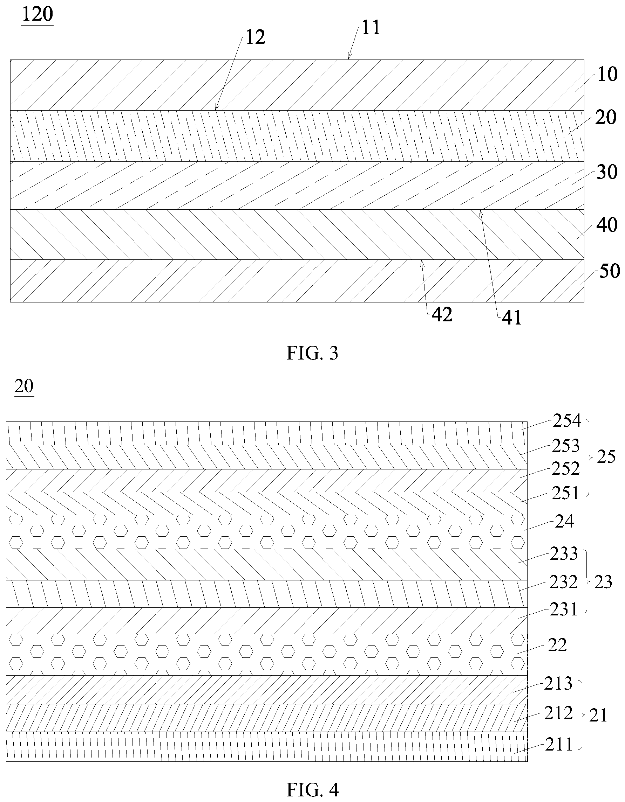

Reference is made to FIG. 3. The laminated glass 120 includes an outer glass 10, an infrared reflective coating 20, an adhesive layer 30, an inner glass 40, and a low-emissivity coating 50. The adhesive layer 30 is sandwiched between the outer glass 10 and the inner glass 40. The infrared reflective coating 20 is disposed on a surface of the outer glass 10 facing the adhesive layer 30, and the low-emissivity coating 50 is disposed on a surface of the inner glass 40 facing away from the adhesive layer 30.

The outer glass 10 is located on the exterior of the vehicle 100. The outer glass 10 has a first surface 11 and a second surface 12. The first surface 11 and the second surface 12 are disposed opposite to each other in a thickness direction of the outer glass 10. The first surface 11 faces the outside of the vehicle 100, and the second surface 12 faces the adhesive layer 30.

In this embodiment, the thickness of the outer glass 10 is 0.7 mm to 4 mm. For example, the thickness of the outer glass 10 is 2.1 mm to 4 mm. In this embodiment, the outer glass 10 is clear glass, or it can be ultra-clear glass. The total iron content (calculated as Fe₂O₃) of the clear glass is less than or equal to 0.1%. For example, the total iron content of the clear glass can be less than or equal to 0.08%, or less than or equal to 0.05%. When the outer glass 10 is clear glass, the visible light transmittance *TL2* of the outer glass 10 is 80% to 95%. The total iron content of the ultra-clear glass is less than or equal to 0.015%. For example, the total iron content of the ultra-clear glass can be less than or equal to 0.01%. When the outer glass 10 is ultra-clear glass, the visible light transmittance *TL2* of the outer glass 10 is greater than or equal to 90%. The outer glass 10 is made of clear or ultra-clear glass, which allows the infrared reflective coating 20 to reflect as much infrared radiation in sunlight as possible, while minimizing the absorption of infrared radiation in sunlight, thus better reducing the total solar transmittance of the laminated glass 120.

The infrared reflective coating 20 is disposed on the second surface 12 of the outer glass 10. For example, the infrared reflective coating 20 can be deposited layer by layer onto the second surface 12 using a magnetron sputtering process. By optimizing the design of the materials and thickness of each layer of the infrared reflective coating 20, the infrared reflective coating 20 can withstand subsequent high-temperature heat treatment and other bending and forming processes at least 500°C. Furthermore, the optical and mechanical properties of the laminated glass 120 with the infrared reflective coating 20 meet the usage standards of the vehicle 100 for the laminated glass 120.

The adhesive layer 30 is used to connect the outer glass 10 and the inner glass 40 to improve the structural strength of the laminated glass 120, enabling it to meet safety standards and regulatory requirements in more scenarios. The adhesive layer 30 can be a transparent polymer film or a tinted polymer film, with a thickness of 0.38 mm to 2.66 mm. For example, the thickness for the adhesive layer 30 may be 0.38 mm, 0.76 mm, or 1.52 mm, etc. Optionally, the visible light transmittance of the transparent polymer film is greater than or equal to 80%, specifically exemplified by 80%, 81%, 85%, 88%, 90%, and 92%, preferably greater than or equal to 85%. Optionally, the visible light transmittance of the tinted polymer film is less than or equal to 50%, specifically exemplified by 50%, 44%, 40%, 36%, 30%, 28%, 25%, 20%, 18%, 16%, 14%, 12%, 10%, 9%, 8%, 7%, 6%, 5%, 4%, 3%, 2%, 1%, preferably less than or equal to 20%, more preferably less than or equal to 10%, even less than or equal to 8%, and even more preferably less than or equal to 5%. The material of the transparent polymer film or the tinted polymer film can include at least one member selected from the group consisting of polyvinyl butyral (PVB), polyurethane (PU), ethylene-vinyl acetate copolymer (EVA), and ionomer polymer (SGP). Specifically, when the inner glass 40 is clear glass, the adhesive layer 30 is a tinted polymer film. When the inner glass 40 is tinted glass, the adhesive layer 30 is a transparent polymer film or a tinted polymer film.

The inner glass 40 is located in the interior of the vehicle 100. The inner glass 40 has a third surface 41 and a fourth surface 42. The third surface 41 and the fourth surface 42 are disposed opposite to each other in a thickness direction of the inner glass 40. The third surface 41 faces the adhesive layer 30, and the fourth surface 42 faces the interior of the vehicle 100.

The inner glass 40 can be clear glass or ultra-clear glass, or it can be tinted glass such as green glass, gray glass, blue glass, or brown glass. The embodiments of the present disclosure do not impose strict limitations in this regard. The total iron content of the tinted glass is greater than or equal to 0.5%. For example, the total iron content of the tinted glass is 0.5% to 1.8%, or the total iron content of the tinted glass is 0.8% to 1.5%. When the inner glass 40 is tinted glass, the visible light transmittance of the inner glass 40 is less than or equal to 85%, preferably less than or equal to 50%, more preferably less than or equal to 30%. It is understood that in some embodiments, the inner glass 40 is tinted glass, and/or the adhesive layer 30 is a tinted polymer film, that is, at least one of the inner glass 40 or the adhesive layer 30 is tinted. Specifically, the inner glass 40 is tinted glass and the adhesive layer 30 is a transparent polymer film; or, the inner glass is tinted glass and the adhesive layer 30 is a tinted polymer film; or, the inner glass 40 is clear glass and the adhesive layer 30 is a tinted polymer film.

Furthermore, the thickness of the inner glass 40 is 0.7 mm to 4 mm. For example, the thickness of the inner glass 40 is 0.7 mm to 1.8 mm. The thickness of the inner glass 40 is less than that of the outer glass 10. For example, the difference between the thickness of the outer glass 10 and the thickness of the inner glass 40 is greater than 0.3 mm. With this configuration, a thinner inner glass 40 can be used to form a laminated glass structure with an asymmetric thickness, maintaining good overall strength while reducing the total thickness of the laminated glass 120 to achieve light weighting.

The low-emissivity coating 50 is disposed on the fourth surface 42. The low-emissivity coating 50 includes at least one transparent conductive oxide (TCO) layer. The material of the at least one transparent conductive oxide layer includes at least one member selected from the group consisting of doped zinc oxide, indium tin oxide (ITO), nickel chromium oxide (NiCrOₓ), and fluorine-doped tin oxide (FTO). The doped zinc oxide is zinc oxide doped with one or more of the following elements: aluminum, tungsten, hafnium, gallium, yttrium, niobium, and neodymium. The low-emissivity coating 50 can be deposited on the fourth surface 42 through processes such as magnetron sputtering, which can further reduce the emissivity of the laminated glass 120. The emissivity of the laminated glass 120 measured from a side where the fourth surface 42 is located is less than or equal to 0.30, preferably less than or equal to 0.25, or even less than or equal to 0.20.

The laminated glass 120 provided in this embodiment has a maximum color difference Cₘₐₓ of reflected color of ≤ 3.5 for light at an incident angle θ in a range of 10° ≤ θ ≤ 80°. It can be understood that the laminated glass 120 provided in the present disclosure, through the infrared reflective coating 20 deposited on the second surface 12 of the outer glass 10, reflects infrared light in sunlight to the exterior of the vehicle without entering into the interior of the vehicle, thus achieving good heat insulation. Furthermore, the reflected color of the laminated glass 120 can be adjusted when viewed from outside the vehicle, making the reflected color of the laminated glass 120 close to a neutral color, and minimizing the difference in appearance color of the laminated glass 120 at different viewing angles. This facilitates achieving a neutral color appearance from all angles, thereby ensuring the consistency of the overall appearance color of the vehicle and improving the visual premium feel of the overall vehicle appearance. Preferably, the maximum color difference Cₘₐₓ≤ 3, or the maximum color difference Cₘₐₓ≤ 2.5, or the maximum color difference Cₘₐₓ≤ 2.

In some embodiments, the visible light transmittance of the laminated glass 120 is *TL1,* which is less than 10%, in order to reduce visible light entering the vehicle and better protect privacy or meet the shading requirements. *TL1* can be specifically exemplified as 9%, 8%, 7%, 6%, 5%, 4%, 3%, 2%, 1%, 0.5%, etc.

In some embodiments, the total solar transmittance of the laminated glass 120 is *TTS,* which is less than 25%, in order to achieve a lower total solar transmittance *TTS,* so that the laminated glass 120 has heat insulation and sun protection effects. Preferably, the total solar transmittance *TTS* is less than or equal to 20%, more preferably less than or equal to 16%, or even less than or equal to 13%, thereby greatly improving the thermal comfort inside the vehicle. The total solar transmittance *TTS* of the laminated glass 120 is calculated according to standard ISO9050.

In some embodiments, a visible light reflectance of the laminated glass 120 measured from a side where the first surface 11 is located is *RL*, and *RL <* 15%, to reduce reflections and light pollution on the exterior of the vehicle. *RL* can specifically be 14%, 13%, 12%, 11%, 10%, 9%, 8%, 7%, 6.5%, etc., preferably *RL* ≤ 10%.

In some embodiments, when the incident angle θ is in a range of 10°≤θ≤80°, a Lab value of the reflected color of the laminated glass 120 measured from a side where the first surface 11 is located satisfies: -5≤*a*≤1 and -5≤*b*≤1. This makes the reflected color of the laminated glass 120 close to a neutral color and minimizes the difference in appearance color of the laminated glass 120 at different viewing angles, which is beneficial for achieving a neutral color appearance from all angles. Preferably, *a* satisfies: -4≤*a*≤1, or -3≤*a*≤0.5, or -2≤*a*≤0. Preferably, *b* satisfies: -4≤*b*≤-1, or -3≤*b*≤0, or -2.5≤*b*≤1, or -1.5≤*b*≤1.

The specific structure of the infrared reflective coating 20 is described below.

The infrared reflective coating 20 includes at least two metal layers and at least three dielectric layers, with each metal layer located between two adjacent dielectric layers. The material of the metal layers is a metal or metal alloy of at least one element selected from silver (Ag), gold (Au), copper (Cu), aluminum (Al), and platinum (Pt), specifically, the infrared reflective coating 20 may include two silver layers, three silver layers, or four silver layers. The physical thickness of each metal layer is 4nm-20nm, for example, specific values such as 4nm, 5nm, 10nm, 15nm, 20nm, etc., and a range with any two of the above specific values as endpoints. Optionally, the total thickness of all metal layers can be controlled to be 15nm-50nm.

The dielectric layer serves two purposes: firstly, it protects the metal layer from damage during processing or use; secondly, it adjusts the optical, mechanical, and reflective properties of the infrared reflective coating 20. Each dielectric layer comprises 2-5 dielectric sublayers. The material of the dielectric sublayers is selected from at least one of nitrides, oxides, or oxynitrides of at least one element selected from Zn, Sn, Ti, Si, Al, Ni, Cr, Nb, Mg, Zr, Ga, Y, In, Sb, V, and Ta. For example, the material of the dielectric sublayer includes zinc tin oxide (ZnSnOₓ), titanium oxide(TiOₓ), silicon nitride (SiNₓ), aluminum-doped zinc oxide (AZO), zirconia (ZrOₓ), and niobium oxide (NbOₓ).

Specifically, the infrared reflective coating 20 includes an inner dielectric layer 21, at least two metal layers, at least one intermediate dielectric layer, and an outer dielectric layer 25, stacked sequentially in a direction away from the second surface 12. Each intermediate dielectric layer is disposed between two adjacent metal layers. The inner dielectric layer 21 is disposed on the second surface 12. The outer dielectric layer 25 is a dielectric layer in the infrared reflective coating 20 that is furthest from the second surface 12. A metal layer closest to the outer dielectric layer 25 serves as the outermost metal layer, and the outermost metal layer is a metal layer furthest from the second surface 12. An intermediate dielectric layer in direct contact with the outermost metal layer serves as the outermost intermediate dielectric layer, and the outermost intermediate dielectric layer is an intermediate dielectric layer furthest from the second surface 12.

Reference is made to FIG. 4. The infrared reflective coating 20 includes two metal layers and three dielectric layers, specifically including an inner dielectric layer 21, a first metal layer 22, a first intermediate dielectric layer 23, a second metal layer 24, and an outer dielectric layer 25, stacked sequentially. In this structure, the second metal layer 24 servers as the outermost metal layer, and the first intermediate dielectric layer 23 servers as the outermost intermediate dielectric layer.

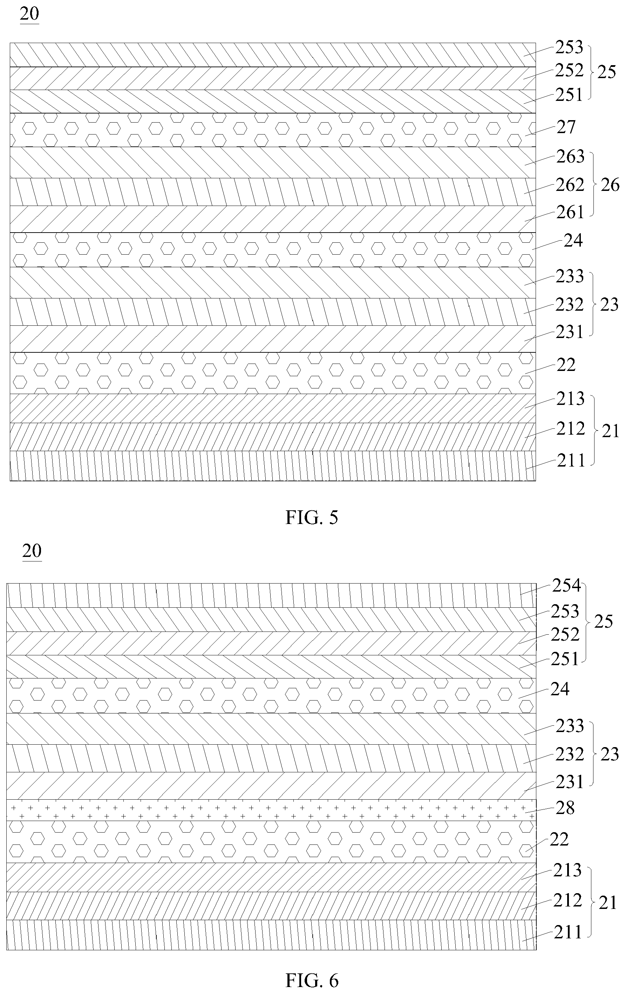

Reference is made to FIG. 5. The infrared reflective coating 20 includes three metal layers and four dielectric layers, specifically including an inner dielectric layer 21, a first metal layer 22, a first intermediate dielectric layer 23, a second metal layer 24, a second intermediate dielectric layer 26, a third metal layer 27, and an outer dielectric layer 25, stacked sequentially. The third metal layer 27 serves as the outermost metal layer, and the second intermediate dielectric layer 26 serves as the outermost intermediate dielectric layer.

Reference is made to FIG. 6. The infrared reflective coating 20 includes two metal layers, three dielectric layers, and one absorption layer, specifically including an inner dielectric layer 21, a first metal layer 22, a first absorption layer 28, a first intermediate dielectric layer 23, a second metal layer 24, and an outer dielectric layer 25, stacked sequentially. In this structure, the second metal layer 24 serves as the outermost metal layer, the first intermediate dielectric layer 23 serves as the outermost intermediate dielectric layer, and the first absorption layer 28 is in direct contact with the first metal layer 22 and located between the first metal layer 22 and the first intermediate dielectric layer 23.

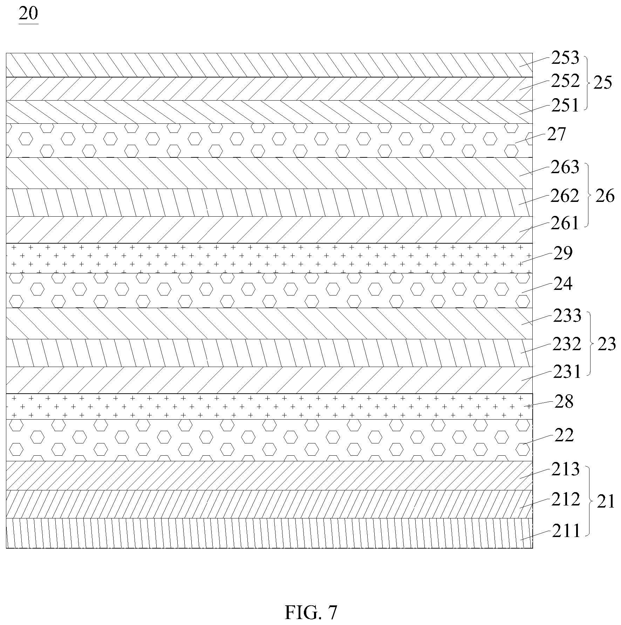

Reference is made to FIG. 7. The infrared reflective coating 20 includes three metal layers, four dielectric layers, and two absorption layers, specifically including an inner dielectric layer 21, a first metal layer 22, a first absorption layer 28, a first intermediate dielectric layer 23, a second metal layer 24, a second absorption layer 29, a second intermediate dielectric layer 26, a third metal layer 27, and an outer dielectric layer 25, stacked sequentially. The third metal layer 27 serves as the outermost metal layer, the second intermediate dielectric layer 26 serves as the outermost intermediate dielectric layer, the first absorption layer 28 is in direct contact with the first metal layer 22 and located between the first metal layer 22 and the first intermediate dielectric layer 23, and the second absorption layer 29 is in direct contact with the second metal layer 24 and located between the second metal layer 24 and the second intermediate dielectric layer 26.

In FIG. 4 to FIG. 7, the inner dielectric layer 21 includes three inner dielectric sublayers, specifically a first inner dielectric sublayer 211, a second inner dielectric sublayer 212, and a third inner dielectric sublayer 213 stacked sequentially. The first inner dielectric sublayer 211 is directly deposited on the second surface 12, and the third inner dielectric sublayer 213 is in direct contact with the first metal layer 22. The inner dielectric layer 21 can reduce or prevent alkali metal ions from diffusing from the outer glass 10 into the infrared reflective coating 20, preventing alkali metal ions from damaging the first metal layer 22. The inner dielectric layer 21 can also serve as a growth substrate for the first metal layer 22, promoting crystal growth of the first metal layer 22. For example, the structure of the inner dielectric layer 21 is a ZnSnOₓ layer / a TiOₓ layer / an AZO layer. In other embodiments, the number of inner dielectric sublayers can be two, four, or five, which is not limited in embodiments of the present disclosure. For the sake of design and manufacturing convenience of the infrared reflective coating 20, the average refractive index of the inner dielectric layer 21 is preferably 1.9-2.4, specifically 1.9, 2.0, 2.05, 2.1, 2.2, 2.3, 2.4, etc.

In FIG. 4 and FIG. 6, the outer dielectric layer 25 includes four outer dielectric sublayers, specifically including a first outer dielectric sublayer 251, a second outer dielectric sublayer 252, a third outer dielectric sublayer 253, and a fourth outer dielectric sublayer 254 stacked sequentially. For example, the structure of the outer dielectric layer 25 is an AZO layer / a TiOₓlayer / a ZnSnOₓlayer / an SiNₓlayer. In Figures 5 and 7, the outer dielectric layer 25 includes three outer dielectric sublayers, specifically including a first outer dielectric sublayer 251, a second outer dielectric sublayer 252, and a third outer dielectric sublayer 253 stacked sequentially; for example, the structure of the outer dielectric layer 25 is an AZO layer / a ZnSnOₓlayer / an SiNₓlayer. The outer dielectric layer 25 is the dielectric layer furthest from the second surface 12 in the infrared reflective coating 20. The outer dielectric layer 25 not only isolates oxygen and moisture from the external environment, preventing oxidation and corrosion of the metal layer in the infrared reflective coating 20, but also improves the hardness, scratch resistance, and processing performance of the infrared reflective coating 20, and adjusts the optical performance of the infrared reflective coating 20. In some other embodiments, the number of outer dielectric sublayers may be two or five, which is not limited in embodiments of the present disclosure. For ease of design and manufacturing convenience of the infrared reflective coating 20, the average refractive index of the outer dielectric layer 25 is preferably 1.9-2.4, specifically 1.9, 2.0, 2.05, 2.1, 2.2, 2.3, 2.4, etc. More preferably, one of the outer dielectric sublayers has a refractive index of 2.5-2.75 and a physical thickness of 0.5nm-10nm.

To better adjust the optical performance of the infrared reflective coating 20, especially to make the reflected color of the laminated glass 120 close to a neutral color, and to minimize the difference in appearance color of the laminated glass 120 at different viewing angles, it is preferable that the ratio of the physical thickness of the outer dielectric layer 25 to the physical thickness of the outermost metal layer is greater than or equal to 4, more preferably 4.5-10; specific examples include 4.5, 5, 6, 7, 8, 9, 10, etc.

In FIG. 4 to FIG. 7, the first intermediate dielectric layer 23 and the second intermediate dielectric layer 26 each independently include three intermediate dielectric sublayers. Specifically, the first intermediate dielectric layer 23 includes a first intermediate dielectric sublayer 231, a second intermediate dielectric sublayer 232, and a third intermediate dielectric sublayer 233 stacked sequentially. The first intermediate dielectric layer 23 is used to separate the first metal layer 22 and the second metal layer 24, protecting the first metal layer 22 and serving as a growth substrate for the second metal layer 24, promoting crystallization growth of the second metal layer 24. For example, the structure of the first intermediate dielectric layer 23 is an AZO layer / a ZnSnOₓ layer / an AZO layer. The second intermediate dielectric layer 26 includes a fourth intermediate dielectric sublayer 261, a fifth intermediate dielectric sublayer 262, and a sixth intermediate dielectric sublayer 263 stacked sequentially. The second intermediate dielectric layer 26 is used to separate the second metal layer 24 and the third metal layer 27, protecting the second metal layer 24 and serving as a growth substrate for the third metal layer 27, promoting crystallization growth of the third metal layer 27. For example, the structure of the first intermediate dielectric layer 23 is an AZO layer / a ZnSnOₓlayer / an AZO layer. In some other embodiments, the first intermediate dielectric layer 23 and the second intermediate dielectric layer 26 each independently include two, four, or five intermediate dielectric sublayers, which is not limited in embodiments of the present disclosure. For the sake of design and manufacturing convenience of the infrared reflective coating 20, it is preferred that the average refractive index of each of the first intermediate dielectric layer 23 and the second intermediate dielectric layer 26 is 1.9-2.4, specifically 1.9, 2.0, 2.05, 2.1, 2.2, 2.3, 2.4, etc.

To better adjust the optical performance of the infrared reflective coating 20, especially to make the reflected color of the laminated glass 120 close to a neutral color, and to minimize the difference in appearance color of the laminated glass 120 at different viewing angles, it is preferable that the ratio of the sum of the physical thicknesses of the outermost intermediate dielectric layer and the outer dielectric layer 25 to the physical thickness of the outermost metal layer is greater than or equal to 14, preferably 15-20; specific examples include 15, 16, 17, 18, 19, 20, etc.

In FIG. 6 and FIG. 7, the infrared reflective coating 20 also includes an absorption layer in direct contact with the metal layer, disposed between the metal layer and the intermediate dielectric layer, and/or, disposed between the metal layer and the outer dielectric layer 25. The absorption layer can absorb visible light, reducing the visible light transmittance and visible light reflectance of the infrared reflective coating 20, thereby helping to adjust the reflected color of the infrared reflective coating 20, and thus making the appearance color of the laminated glass 120 close to a neutral color, meeting the overall appearance design requirements of the vehicle 100. The number of absorption layers can be the same as or less than the number of metal layers. For example, if the number of metal layers is 3, the number of absorption layers can be 1, 2, or 3. The material of the absorption layer includes at least one member selected from the group consisting of NiCr, NiAl, NiSi, Cr, TiN, NbN, and MoTi. The thickness of the absorption layer is 0.1 nm to 20 nm. For example, the thickness of the absorption layer is 0.5 nm to 10 nm.

It may be noted that, in embodiments of the present disclosure, for a value range of x in the chemical formulas involved shall be subject to the explicitly defined range, if any. For those not explicitly defined, it can be determined according to deposition in the magnetron sputtering process using stoichiometry, substoichiometry, or superstoichiometry. The refractive index involved in the embodiments of the present disclosure is the refractive index measured and calculated at a wavelength of 550nm. The average refractive index of the dielectric layer is the total optical thickness of all dielectric sublayers thereof divided by the total physical thickness of the dielectric layer. The optical thickness of each dielectric sublayer is equal to the refractive index of the dielectric sublayer multiplied by its physical thickness.

Further description will be given below in conjunction with specific embodiments, but the present disclosure is not limited to the following embodiments.

### Comparative Examples 1-2 and Embodiments 1-4

Prepare the outer glass 10, infrared reflective coating 20, adhesive layer 30, and inner glass 40 in Comparative Examples 1-2 and Embodiments 1-4. The infrared reflective coating 20 shown in Tables 1 and 2 is deposited on the second surface 12 of the outer glass 10 by magnetron sputtering. The outer glass 10 is selected as clear glass with a thickness of 2.1 mm and a visible light transmittance of 88%. The outer glass 10 with the infrared reflective coating 20 is subjected to a high-temperature heat treatment and an automotive glass bending forming process at at least 500°C. Then, it is processed together with the adhesive layer 30 and the inner glass 40 to obtain the laminated glass 120 of Comparative Examples 1-2 and Embodiments 1-4.

Comparative Examples 1-2 and Embodiment 1: The adhesive layer 30 is made of gray PVB with a thickness of 0.76 mm and a visible light transmittance of 9%; and the inner glass 40 is made of clear glass with a thickness of 2.1 mm and a visible light transmittance of 88%.

Embodiment 2: The adhesive layer 30 is made of gray PVB with a thickness of 0.76 mm and a visible light transmittance of 9%; and the inner glass 40 is made of green glass with a thickness of 2.1 mm and a visible light transmittance of 83%.

Embodiment 3: The adhesive layer 30 is made of gray PVB with a thickness of 0.76 mm and a visible light transmittance of 9%; and the inner glass 40 is made of gray glass with a thickness of 2.1 mm and a visible light transmittance of 28%.

Embodiment 4: The adhesive layer 30 is made of gray PVB with a thickness of 0.76 mm and a visible light transmittance of 3%; and the inner glass 40 is made of green glass with a thickness of 2.1 mm and a visible light transmittance of 83%.

The visible light transmittance *TL,* visible light reflectance *RL*, reflected color, and maximum color difference Cₘₐₓ of the laminated glass 120 of Comparative Examples 1-2 and Embodiments 1-4 were measured and calculated, and the measurement results of Comparative Examples 1-2 and Embodiment 1 were recorded in Table 1, and the measurement results of Embodiments 2-4 were recorded in Table 2.

Visible light transmittance *TL*: The transmittance of the laminated glass 120 for visible light with a wavelength of 380nm-780nm is measured and calculated according to ISO 9050.

Visible light reflectance *RL*: The reflectance of the laminated glass 120 for visible light with a wavelength of 380nm-780nm is measured and calculated from one side where the first surface 11 is located, according to ISO 9050.

Reflected color: From one side where the first surface 11 is located, the a-value and b-value are calculated according to the CIE Lab color model based on the D65 illuminant and a 10° viewing angle, under incident angles of 10°, 20°, 30°, 40°, 50°, 60°, 70°, and 80°. The a-value represents the red-green value, and the b-value represents the yellow-blue value. a₁₀ represents the a-value of the reflected color at an incident angle of 10°, and b₁₀ represents the b-value of the reflected color at an incident angle of 10°, and so on for other incident angles.

Maximum color difference Cₘₐₓ: The color difference between reflected colors at any two incident angles is calculated according to formula $C = \sqrt{{\left(Δa\right)}^{2} + {\left(Δb\right)}^{2}}$, and the maximum value is taken as the maximum color difference Cₘₐₓ. For example, the color difference C between the reflected color at an incident angle of 10° and the reflected color at an incident angle of 80° is $C = \sqrt{{\left({a}_{10}-{a}_{80}\right)}^{2} + {\left({b}_{10}-{b}_{80}\right)}^{2}}$_{∘}

**Table 1: Measurement Results of Laminated Glass 120 in Comparative Examples 1-2 and Embodiment 1**

| | | Comparative Example 1 | Comparative Example 2 | Embodiment 1 |
|---|---|---|---|---|
| Structure | | 2.1 mm clear glass / 0.76 mm gray PVB / 2.1 mm clear glass | | |
| Infrared Reflective Layer | Inner Dielectric Layer | ZnSnOₓ/22.7nm | ZnSnOₓ/22.7nm | ZnSnOₓ/22nm |
| | | TiOₓ/4.6nm | TiOₓ/4.6nm | TiOₓ/3.1nm |
| | | AZO/10.2nm | AZO/10.2nm | AZO/10.2nm |
| | First Metal Layer | Ag/10.8nm | Ag/10.8nm | Ag/11.6nm |
| | First Absorption Layer | NiCr/2.5nm | NiCr/2.5nm | / |
| | First Intermediate Dielectric Layer | AZO/10.8nm | AZO/10.8nm | AZO/10.8nm |
| | | ZnSnOₓ/67.1nm | ZnSnOₓ/88.2nm | ZnSnOₓ/65.4nm |
| | | AZO/12.7nm | AZO/12.7nm | AZO/13nm |
| | Second Metal Layer | Ag/15nm | Ag/12nm | Ag/8nm |
| | Second Absorption Layer | / | / | / |
| | Outer Dielectric Layer | AZO/10.5nm | AZO/10.5nm | AZO/10.5nm |
| | | TiOₓ/2.5nm | TiOₓ/2.5nm | TiOₓ/2.5nm |
| | | ZnSnOₓ/30nm | ZnSnOₓ/10.2nm | ZnSnOₓ/9.8nm |
| | | SiNₓ/14.8nm | SiNₓ 14.8nm | SiNₓ/14.8nm |
| Ratio of physical thickness of outer dielectric layer to physical thickness of second metal layer | | 3.9 | 3.2 | 4.7 |
| Ratio of sum of physical thicknesses of first intermediate dielectric layer and outer dielectric layer to physical thickness of outermost metal layer | | 9.89 | 12.48 | 15.85 |
| Visible light transmittance *TL* | | 6.94% | 5.96% | 8.27% |
| Visible light reflectance *RL* | | 11.74% | 29.22% | 8.46% |
| Reflected Color | a₁₀, b₁₀ | -1.95, -36.98 | -8.69, -1.38 | -1.37, -0.96 |
| | a₂₀, b₂₀ | 0.05, -37.38 | -9.31, -2.13 | -1.38, -0.85 |
| | a₃₀, b₃₀ | 3.27, -37.54 | -10.36, -3.35 | -1.3, -0.87 |
| | a₄₀, b₄₀ | 7.19, -36.70 | -11.49, -4.91 | -1.00, -1.21 |
| | a₅₀, b₅₀ | 10.51, -33.89 | -12.45, -6.68 | -0.39, -1.96 |
| | a₆₀, b₆₀ | 11.39, -28.29 | -12.31, -8.05 | 0.37, -2.75 |
| | a₇₀, b₇₀ | 8.82, -19.66 | -9.82, -7.93 | 0.79, -2.80 |
| | a₈₀, b₈₀ | 0.44, -3.39 | -4.61, -4.85 | 0.51, -1.56 |
| Maximum color difference Cₘₐₓ | | 34.27 | 8.34 | 2.92 |

As can be seen from Table 1, the laminated glass 120 provided in Comparative Examples 1-2 and Embodiment 1 both include two metal layers and three dielectric layers. The second metal layer 24 servers as the outermost metal layer, and the first intermediate dielectric layer 23 serves as the outermost intermediate dielectric layer.

The ratio of the physical thickness of the outer dielectric layer 25 to the physical thickness of the outermost metal layer of the laminated glass 120 provided in Comparative Example 1 is less than 4, and the ratio of the sum of the physical thicknesses of the first intermediate dielectric layer 23 and the outer dielectric layer 25 to the physical thickness of the outermost metal layer is less than 10. When measuring the Lab value of the reflected color of the laminated glass 120 of Comparative Example 1 from one side where the first surface 11 is located, when the incident angle θ is in a range of 30°≤θ≤70°, *a* is greater than 3, even greater than 10; when the incident angle θ is in a range of 10°≤θ≤70°, *b* is less than -5, even less than - 30; and the maximum color difference Cₘₐₓ is greater than 30. Therefore, the reflected color of the laminated glass 120 provided in Comparative Example 1 is severely reddish and deviates significantly from the neutral color, and the appearance color varies greatly under different viewing angles, failing to meet the requirement of ensuring the consistency of the overall appearance color of the vehicle 100.

The ratio of the physical thickness of the outer dielectric layer 25 to the physical thickness of the outermost metal layer of the laminated glass 120 provided in Comparative Example 2 is less than 4, and the ratio of the sum of the physical thicknesses of the first intermediate dielectric layer 23 and the outer dielectric layer 25 to the physical thickness of the outermost metal layer is less than 14; in the Lab value of the reflected color of the laminated glass 120 of Comparative Example 2 measured from one side where the first surface 11 is located, when the incident angle θ is in a range of 10°≤θ≤70°, *a* is less than -5, even less than - 10; when the incident angle θ is in a range of 50°≤θ≤70°, *b* is less than -5; and the maximum color difference Cₘₐₓ is greater than 8. Therefore, the reflected color of the laminated glass 120 provided in Comparative Example 2 deviates from the neutral color, and the appearance color varies greatly under different viewing angles, which cannot meet the requirement of ensuring the consistency of the overall appearance color of the vehicle 100.

In Embodiment 1, the ratio of the physical thickness of the outer dielectric layer 25 to the physical thickness of the outermost metal layer of the laminated glass 120 is greater than 4, and the ratio of the sum of the physical thicknesses of the first intermediate dielectric layer 23 and the outer dielectric layer 25 to the physical thickness of the outermost metal layer is greater than 15. When measuring the Lab value of the reflected color of the laminated glass 120 from one side where the first surface 11 is located, when the incident angle θ is in a range of 10°≤θ≤80°, -1.5≤*a*≤1, and -3≤*b*≤-0.5; and the maximum color difference Cₘₐₓ is less than 3. The visible light transmittance *TL* of the laminated glass 120 provided in Embodiment 1 is less than 10%, and the visible light reflectance *RL* is less than 10%. Therefore, the reflected color of the laminated glass 120 provided in Embodiment 1 is close to a neutral color, and the difference in appearance color under different viewing angles is small, which is beneficial for achieving a neutral color appearance from all angles and can meet the requirement of ensuring the consistency of the overall appearance color of the vehicle 100.

**Table 2: Measurement results of laminated glass 120 in Embodiments 2-4**

| | | Embodiment 2 | Embodiment 3 | Embodiment 4 |
|---|---|---|---|---|
| Structure | | 2.1 mm clear glass / 0.76 mm gray PVB / 2.1 mm green glass | 2.1 mm clear glass / 0.76 mm gray PVB / 2.1 mm gray glass | 2.1 mm clear glass / 0.76 mm gray PVB / 2.1 mm green glass |
| Infrared Reflective Layer | Inner Dielectric Layer | ZnSnOₓ/21.4nm | ZnSnOₓ/22.7nm | ZnSnOₓ/21.4nm |
| | | TiO_{X}/3.1nm | TiOₓ/4.6nm | TiOₓ/3.1nm |
| | | AZO/10.9nm | AZO/10.2nm | AZO/10.9nm |
| | First Metal Layer | Ag/12nm | Ag/11.8nm | Ag/12nm |
| | First Absorption Layer | / | NiCr 2.5nm | / |
| | First intermediate dielectric layer | AZO/12.4nm | AZO 10.8nm | AZO 12.4nm |
| | | ZnSnOₓ/73.9nm | ZnSnOₓ/67.1nm | ZnSnOₓ/71.7nm |
| | | AZO 12.1nm | AZO/12.7nm | AZO/12.1nm |
| | Second metal layer | Ag/7.5nm | Ag/7.4nm | Ag/7.5nm |
| | Second absorption layer | NiCr/0.5nm | NiCr/2.5nm | / |
| | Outer dielectric layer | AZO 10.5nm | AZO/10.5nm | AZO/10.5nm |
| | | TiOₓ/3nm | TiOₓ/2.5nm | TiOₓ/3nm |
| | | ZnSnOₓ/10.5nm | ZnSnOₓ/9.8nm | ZnSnOₓ/10.5nm |
| | | SiNₓ/14.8nm | SiNₓ/14.8nm | SiNₓ/14.8nm |
| Ratio of physical thickness of outer dielectric layer to physical thickness of outermost metal layer | | 5.2 | 5.1 | 5.2 |
| Ratio of sum of physical thicknesses of first intermediate dielectric layer and outer dielectric layer to physical thickness of outermost metal layer | | 18.29 | 17.32 | 18 |
| Visible light transmittance *TL* | | 7.01% | 2.26% | 0.96% |
| Visible light reflectance *RL* | | 11.5% | 13.9% | 11.2% |
| Reflected Color | a₁₀, b₁₀ | -0.62, -2.38 | -1.15, -1.88 | -0.1, 0 |
| | a₂₀, b₂₀ | -0.81, -2.18 | -1.18, -1.68 | -0.31, 0.22 |
| | a₃₀, b₃₀ | -1.09, -1.97 | -1.19, -1.48 | -0.64, 0.4 |
| | a₄₀, b₄₀ | -1.38, -1.99 | -1.06, -1.47 | -0.98, 0.27 |
| | a₅₀, b₅₀ | -1.5, -2.44 | -0.70, -1.84 | -1.16, -0.43 |
| | a₆₀, b₆₀ | -1.28, -3.18 | -0.14, -2.47 | -1, -1.56 |
| | a₇₀, b₇₀ | -0.75, -3.39 | 0.35, -2.74 | -0.56, -2.29 |
| | a₈₀, b₈₀ | -0.22, -2.06 | 0.34, -1.76 | -0.14, -1.58 |
| Maximum color difference Cₘₐₓ | | 1.54 | 1.99 | 2.69 |

As can be seen from Table 2, the laminated glass 120 provided in Embodiments 2-4 all include two metal layers and three dielectric layers. The second metal layer 24 serves as the outermost metal layer, and the first intermediate dielectric layer 23 serves as the outermost intermediate dielectric layer.

The ratio of the physical thickness of the outer dielectric layer 25 to the physical thickness of the outermost metal layer of the laminated glass 120 provided in Embodiments 2-4 is greater than 5, and the ratio of the sum of the physical thicknesses of the first intermediate dielectric layer 23 and the outer dielectric layer 25 to the physical thickness of the outermost metal layer is greater than 16. When measuring the Lab value of the reflected color of the laminated glass 120 of embodiments from one side where the first surface 11 is located, when the incident angle θ is in a range of 10°≤θ≤80°, -1.5≤*a*≤0.5, -3.5≤*b*≤-1 or -2.5≤*b*≤0.5; and the maximum color difference Cₘₐₓ is less than 3, or even less than 2. The visible light transmittance *TL* of the laminated glass 120 provided in Embodiments 2-4 is less than 8%, less than 3%, and less than 1%, and the visible light reflectance *RL* is less than 15%. Therefore, the reflected color of the laminated glass 120 provided in Embodiments 2-4 is close to a neutral color, and the difference in appearance color under different viewing angles is small, which is conducive to achieving a neutral color appearance from all angles and can meet the requirement of ensuring the consistency of the overall appearance color of the vehicle 100.

Compared with Embodiment 4, the maximum color difference Cₘₐₓ of the reflected color of the laminated glass 120 provided in Embodiment 2 is smaller than that of the laminated glass 120 provided in Embodiment 4. This indicates that the difference in reflected color of the laminated glass 120 provided in Embodiment 2 is smaller at different angles. It is understood that since an absorption layer is provided in Embodiment 2, the absorption layer can absorb visible light, which is beneficial to reducing the visible light reflectance of the laminated glass 120 and the difference in reflected color at different viewing angles.

### Comparative Example 3 and Embodiments 5-6

Prepare the outer glass 10, infrared reflective coating 20, adhesive layer 30, and inner glass 40 in Comparative Example 3 and Embodiments 5-6. The infrared reflective coating 20 (as shown in Table 3) is deposited on the second surface 12 of the outer glass 10 by magnetron sputtering. The outer glass 10 is selected as clear glass with a thickness of 2.1 mm and a visible light transmittance of 88%. The outer glass 10 with the infrared reflective coating 20 is subjected to a high-temperature heat treatment and an automotive glass bending process at least 500°C. Then, it is processed together with the adhesive layer 30 and the inner glass 40 to obtain the laminated glass 120 of Comparative Example 3 and Embodiments 5-6.

Comparative Example 3 and Embodiment 6: The adhesive layer 30 is made of gray PVB with a thickness of 0.76 mm and a visible light transmittance of 9%; and the inner glass 40 is made of clear glass with a thickness of 2.1 mm and a visible light transmittance of 88%.

Embodiment 5: The adhesive layer 30 is made of gray PVB with a thickness of 0.76 mm and a visible light transmittance of 3%; and the inner glass 40 is made of gray glass with a thickness of 2.1 mm and a visible light transmittance of 28%.

The visible light transmittance *TL,* visible light reflectance *RL*, reflected color, and maximum color difference Cₘₐₓ of the laminated glass 120 of Comparative Example 3 and Embodiments 5-6 were measured and calculated, and the measurement results were recorded in Table 3.

**Table 3: Measurement results of laminated glass 120 of Comparative Example 3 and Embodiments 5-6**

| | | Comparative Example 3 | Embodiment 5 | Embodiment 6 |
|---|---|---|---|---|
| Structure | | 2.1 mm clear glass / 0.76 mm gray PVB/2.1 mm clear glass | 2.1 mm clear glass / 0.76 mm gray PVB / 2.1 mm gray glass | 2.1 mm clear glass / 0.76 mm gray PVB / 2.1 mm clear glass |
| Infrared Reflecting Layer Shooting layer | Inner Dielectric Layer | ZnSnOₓ/29nm | ZnSnOₓ/29nm | ZnSnOₓ/29nm |
| | | TiOₓ/5nm | / | TiOₓ/5nm |
| | | AZO/14.5nm | AZO/14.5nm | AZO/14.5nm |
| | First Metal Layer | At 9.3nm | Ag/8nm | Ag/8.3nm |
| | First Absorption Layer | NiCr/1.4nm | NiCr/1.5nm | NiCr/1.4nm |
| | First intermediate dielectric layer | AZO/11.3nm | AZO/11.3nm | AZO/11.3nm |
| | | ZnSnOₓ/55.4nm | ZnSnOₓ/54.9nm | ZnSnOₓ/54.5nm |
| | | AZO/10.4nm | AZO/10.4nm | AZO/10.4nm |
| | Second metal layer | Ag/12.3nm | Ag/11.3nm | Ag/10.6nm |
| | Second absorption layer | / | NiCr/1nm | / |
| | Second intermediate dielectric layer | AZO/11.1nm | AZO/11.1nm | AZO/11.1nm |
| | | ZnSnOₓ/68.1nm | ZnSnOₓ/55.2nm | ZnSnOₓ/63.5nm |
| | | AZO/10.8nm | AZO/11.4nm | AZO/10.8nm |
| | Third metal layer | Ag/13.6nm | Ag/11.9nm | Ag/8.6nm |
| | Outer dielectric layer | AZO/10.7nm | AZO/10.7nm | AZO/10.7nm |
| | | ZnSnOₓ/23.6nm | ZnSnOₓ/91.7nm | ZnSnOₓ/23.6nm |
| | | SiNₓ/14.1nm | SiNₓ/14.1nm | SiNₓ/14.1nm |
| Ratio of physical thickness of outer dielectric layer to physical thickness of third metal layer | | 3.56 | 9.79 | 5.63 |
| Ratio of sum of physical thicknesses of second intermediate dielectric layer and outer dielectric layer to thickness of third metal layer | | 10.18 | 16.32 | 15.56 |
| Visible light transmittance *TL* | | 6.89% | 1.95% | 7.67% |
| Visible light reflectance *RL* | | 11.85% | 13.35% | 6.07% |
| Reflected Color | a₁₀, b₁₀ | -3.3, -9.84 | -1.24, -2.49 | -1.06, -1.07 |
| | a₂₀, b₂₀ | -5.67, -8.26 | -2.40, -1.67 | -1.61, -0.83 |
| | a₃₀, b₃₀ | -8.13, -6.77 | -3.45, -0.84 | -1.75, -0.20 |
| | a₄₀, b₄₀ | -9.44, -5.89 | -3.73, -0.18 | -1.15, 0.06 |
| | a₅₀, b₅₀ | -8.40, -5.43 | -2.93, 0.34 | -0.21, 0.25 |
| | a₆₀, b₆₀ | -5.73, -4.36 | -1.75, 0.83 | 0.19, 0.61 |
| | a₇₀, b₇₀ | -3.36, 2.39 | -1.11, 0.99 | -0.08, 0.73 |
| | a₈₀, b₈₀ | -1.57, -0.63 | -0.71, 0.52 | -0.24, 0.34 |
| Maximum color difference Cₘₐₓ | | 12.23 | 3.48 | 2.31 |

As can be seen from Table 3, the laminated glass 120 provided in Comparative Example 3 and Embodiments 5-6 both include three metal layers and four dielectric layers. The third metal layer 27 serves as the outermost metal layer, and the second intermediate dielectric layer 26 serves as the outermost intermediate dielectric layer.

The ratio of the physical thickness of the outer dielectric layer 25 to the physical thickness of the outermost metal layer of the laminated glass 120 provided in Comparative Example 3 is less than 4, and the ratio of the sum of the physical thicknesses of the second intermediate dielectric layer 26 and the outer dielectric layer 25 to the physical thickness of the outermost metal layer is less than 11; in the Lab value of the reflected color of the laminated glass 120 of Comparative Example 3 measured from one side where the first surface is located, when the incident angle θ is in a range of 20°≤θ≤60°, *a* is less than -5; when the incident angle θ is in a range of 10°≤θ≤50°, *b* is less than -5; and the maximum color difference Cₘₐₓ is greater than 12. Therefore, the reflected color of the laminated glass 120 provided in Comparative Example 3 deviates from the neutral color, and the appearance color varies greatly under different viewing angles, which cannot meet the requirement of ensuring the consistency of the overall appearance color of the vehicle 100.

The ratio of the physical thickness of the outer dielectric layer 25 to the physical thickness of the outermost metal layer of the laminated glass 120 provided in Embodiment 5 is greater than 8, and the ratio of the sum of the physical thicknesses of the second intermediate dielectric layer 26 and the outer dielectric layer 25 to the physical thickness of the outermost metal layer is greater than 15; in the Lab value of the reflected color of the laminated glass 120 of the embodiment measured from one side where the first surface 11 is located, when the incident angle θ is in a range of 10°≤θ≤80°, -4≤*a*≤-0.5, -2.5≤*b*≤1; and the maximum color difference Cₘₐₓ is less than 3.5. The visible light transmittance *TL* of the laminated glass 120 provided in Embodiment 5 is less than 2%, and the visible light reflectance *RL* is less than 15%. Therefore, the reflected color of the laminated glass 120 provided in Embodiment 5 is close to a neutral color, and the difference in appearance color under different viewing angles is small, which is conducive to achieving a neutral color appearance from all angles and can meet the requirement of ensuring the consistency of the overall appearance color of the vehicle 100.

The ratio of the physical thickness of the outer dielectric layer 25 to the physical thickness of the outermost metal layer of the laminated glass 120 provided in Embodiment 6 is greater than 5, and the ratio of the sum of the physical thicknesses of the second intermediate dielectric layer 26 and the outer dielectric layer 25 to the physical thickness of the outermost metal layer is greater than 15; in the Lab value of the reflected color of the laminated glass 120 of the embodiment measured from one side where the first surface 11 is located, when the incident angle θ is in a range of 10°≤θ≤80°, -2≤*a*≤0.5, -1.5≤*b*≤1; and the maximum color difference Cₘₐₓ is less than 2.5. The visible light transmittance *TL* of the laminated glass 120 provided in Embodiment 6 is less than 8%, and the visible light reflectance *RL* is less than 7%. Therefore, the reflected color of the laminated glass 120 provided in Embodiment 6 is close to a neutral color, and the difference in appearance color under different viewing angles is small, which is conducive to achieving a neutral color appearance from all angles and can meet the requirement of ensuring the consistency of the overall appearance color of the vehicle 100.

The embodiments of the present disclosure have been described in detail above. Specific examples have been used in the disclosure to illustrate the principles and implementation methods of the present disclosure. The description of the above embodiments is only for the purpose of helping to understand the method and core ideas of the present disclosure. At the same time, for those of ordinary skill in the art, changes may be made to the specific implementation methods and application scope based on the ideas of the present disclosure. Therefore, the content of this specification should not be construed as a limitation of the present disclosure.

## Claims

1. A laminated glass, wherein the laminated glass comprises an outer glass, an inner glass, an infrared reflective coating, and an adhesive layer, the adhesive layer is sandwiched between the outer glass and the inner glass, the outer glass has a first surface and a second surface disposed opposite to each other, the inner glass has a third surface and a fourth surface disposed opposite to each other, the third surface faces the second surface, and the infrared reflective coating is disposed on the second surface; and
the laminated glass has a maximum color difference Cmax of reflected color of ≤ 3.5 for light at an incident angle θ in a range of 10° ≤ θ ≤ 80°.

2. The laminated glass of claim 1, wherein when the incident angle θ is in a range of 10°≤θ≤80°, a Lab value of the reflected color of the laminated glass measured from a side where the first surface is located satisfies: -5≤*a*≤1 and -5≤*b*≤1.

3. The laminated glass of claim 1, wherein a visible light transmittance of the laminated glass is *TL1*, and *TL1* < 10%; and a total solar energy transmittance of the laminated glass is *TTS,* and *TTS <* 25%.

4. The laminated glass of claim 1, wherein a visible light reflectance of the laminated glass measured from a side where the first surface is located is *RL,* and *RL* < 15%.

5. The laminated glass of claim 1, wherein the laminated glass further comprises a low-emissivity coating, the low-emissivity coating is disposed on the fourth surface, the low-emissivity coating comprises at least one transparent conductive oxide layer, a material of the at least one transparent conductive oxide layer includes at least one member selected from a group consisting of doped zinc oxide, indium tin oxide (ITO), nickel chromium oxide (NiCrOₓ), and fluorine-doped tin oxide (FTO); and the doped zinc oxide is zinc oxide doped with one or more of following elements: aluminum, tungsten, hafnium, gallium, yttrium, niobium, and neodymium.

6. The laminated glass of any one of claims 1 to 5, wherein the infrared reflective coating comprises an inner dielectric layer, at least two metal layers, at least one intermediate dielectric layer, and an outer dielectric layer stacked sequentially, each of the at least one intermediate dielectric layer is disposed between two adjacent metal layers, and the inner dielectric layer is disposed on the second surface; a metal layer among the at least two metal layers closest to the outer dielectric layer serves as an outermost metal layer, and an intermediate dielectric layer among the at least one intermediate dielectric layer in direct contact with the outermost metal layer serves as an outermost intermediate dielectric layer.

7. The laminated glass of claim 6, wherein a ratio of a physical thickness of the outer dielectric layer to a physical thickness of the outermost metal layer is greater than or equal to 4, or is 4.5 to 10.

8. The laminated glass of claim 6, wherein a ratio of a sum of a physical thickness of the outermost intermediate dielectric layer and a physical thickness of the outer dielectric layer to a physical thickness of the outermost metal layer is greater than or equal to 14, or is 15 to 20.

9. The laminated glass of claim 6, wherein the infrared reflective coating further comprises an absorption layer in direct contact with a metal layer; the absorption layer is disposed between the metal layer and an intermediate dielectric layer, and/or, the absorption layer is disposed between the metal layer and the outer dielectric layer; and a material of the absorption layer includes at least one member selected from a group consisting of NiCr, NiAl, NiSi, Cr, TiN, NbN, and MoTi.

10. The laminated glass of claim 6, wherein the inner dielectric layer comprises at least two stacked inner dielectric sublayers, each intermediate dielectric layer comprises at least two stacked intermediate dielectric sublayers, and the outer dielectric layer comprises at least two stacked outer dielectric sublayers.

11. The laminated glass of claim 10, wherein an average refractive index of the inner dielectric layer is 1.9 to 2.4, an average refractive index of each intermediate dielectric layer is 1.9 to 2.4, and an average refractive index of the outer dielectric layer is 1.9 to 2.4.

12. The laminated glass of claim 10, wherein a refractive index of an outer dielectric sublayer is 2.5 to 2.75, and a physical thickness of the outer dielectric sublayer is 0.5nm to 10nm.

13. The laminated glass of any one of claims 1 to 5, wherein the inner glass is tinted glass, and/or the adhesive layer is a tinted polymer film.

14. The laminated glass of any one of claims 1 to 5, wherein a visible light transmittance of the outer glass is *TL2,* and *TL2*>80%.

15. The laminated glass of any one of claims 1 to 5, wherein the outer glass is clear glass or ultra-clear glass, a total iron content of the clear glass is less than or equal to 0.1%, and a total iron content of the ultra-clear glass is less than or equal to 0.015%.

16. The laminated glass of any one of claims 1 to 5, wherein the maximum color difference Cmax≤3, or the maximum color difference Cmax≤2.5, or the maximum color difference Cmax≤2.

17. The laminated glass of claim 2, wherein *a* satisfies: -4≤*a*≤1, or -3≤*a*≤0.5, or -2≤*a*≤0.

18. The laminated glass of claim 2, wherein b satisfies: -4≤*b*≤-1, or -3≤*b*≤0, or -2.5≤*b*≤1, or - 1.5≤*b*≤1.

19. The laminated glass of claim 4, wherein the visible light reflectance of the laminated glass measured from the side where the first surface side is located is *RL,* and *RL*≤10%.

20. A vehicle, comprising a vehicle body and the laminated glass of any one of claims 1 to 19, wherein the laminated glass is mounted on the vehicle body.
